# EUROPÄISCHE PATENTSCHRIFT

(11) **EP 0 718 483 B1**
(45) Veröffentlichungstag und Bekanntmachung des Hinweises auf die Patenterteilung: **16.08.2001**
(21) Anmeldenummer: 95810784.9
(22) Anmeldetag: 11.12.1995
(51) Int. Cl.: F02C 3/30, F02C 3/32

(54) **Dampfeinspritzgasturbine**
Steam injection in gas turbine
Turbine à gaz avec injection de vapeur

(30) Priorität: 24.12.1994 DE 4446543
(43) Veröffentlichungstag der Anmeldung: 26.06.1996
(73) Patentinhaber: ALSTOM (Schweiz) AG, 5400 Baden (CH)
(72) Erfinder: Wettstein, Hans,Dr., CH-5442 Fislisbach (CH)

(56) Entgegenhaltungen:
- EP-A- 0 462 458
- EP-A- 0 681 099
- DE-A- 3 233 832
- GB-A- 2 236 145
- US-A- 2 635 425

## Beschreibung

### Technisches Gebiet

Die vorliegende Erfindung betrifft eine Kraftwerksanlage gemäss Oberbegriff des Anspruchs 1.

### Stand der Technik

Bei der Implementierung von Verbesserungen in Kraftwerksanlagen geht es letztlich immer darum, die Schadstoff-Emissionen aus der Verbrennung zu minimieren sowie den Wirkungsgrad der Anlage zu maximieren. In diesen Zusammenhang wird auf die Gasturbogruppen der neueren Generation hingewiesen, welche Wirkungsgrade von über 35% zu erbringen vermögen. Eine weitere ausgereifte Technik bei Kraftwerksanlagen bilden die sogenannten Kombianlagen. Unter dieser Bezeichnung wird das betriebliche Zusammenwirken einer Gasturbogruppe mit mindestens einem nachgeschalteten Dampfkreislauf verstanden, wobei die Abgase aus dem Gasturboprozess, welche noch über ein grösseres energetisches Potential verfügen, in einen Abhitzedampferzeuger geleitet werden, in welchem die Erzeugung des zur Beaufschlagung einer Dampfturbinen notwendigen Dampfes erfolgt. Dabei kann es sich bei einem solchen Abhitzedampferzeuger um einen Ein- oder Mehrdruck-Apparat handeln. Des weiteren ist es möglich, den Abhitzedampferzeuger mit einer Zusatzfeuerung auszurüsten. Eine solche Anlage vermag nach heutigem Stand der Technik Wirkungsgrade von weit über 55% zu erbringen. Es ist offensichtlich, dass die Bestrebungen dahin gehen, diese fossil befeuerten Kraftwerksanlagen weiter zu entwickeln, erstens im Hinblick darauf, eine bessere Ausnützung der fossilen Reserven zu erzielen, zweitens darauf, dass von der vorgegebenen Plattform aus jeder technologische Fortschritt, im Sinne einer sich ergebenden Hebelwirkung, überproportional zu Buche schlägt. Bei Gasturbogruppen muss ein nicht irrelevanter Anteil der Turbinenleistung zum Antrieb des Verdichters aufgewendet werden, so dass eine Erhöhung des Druckgefälles in der Gasturbine, die an sich zu einem höheren Wirkungsgrad der Anlage führt und über eine höhere Verdichtung der Arbeitsluft im Verdichter zu erreichen ist, mithin bilanzmässig weniger bis nichts bringt, denn die Plusleistung aus der Turbine geht in Form einer erhöhten Aufnahme der Wellenleistung durch den Verdichter verloren.

Es ist aus der EP 0 462 458 ein Verfahren zur Erhöhung des verdichterbedingten Druckgefälles der Gasturbine einer Kraftwerksanlage bekanntgeworden, bei welchem die Schaltung aus einer Gasturbogruppe und einem nachgeschalteten Abhitzedampferzeuger besteht. Unmittelbar stromauf der Brennkammer wirkt ein Injektor, durch dessen Fangdüse die im Kompressor vorverdichtete Luft strömt. Die Treibdüse dieses Injektors wird durch mindestens einen Teil des im Abhitzedampferzeuger anfallenden Dampfes beaufschlagt, wodurch die Verdichterluft weiter verdichtet wird, dies ohne Inanspruchnahme eines Anteils der Leistung aus der Gasturbine. An sich bringt diese Ausrichtung eine Verbesserung des Wirkungsgrades mit sich, allerdings ist zu sagen, dass eine solche Technik Probleme auslöst, da die Luftzuführung aus dem Verdichter über ein nachgeschaltetes Injektorsystem strömungstechnische kostspielige und nicht immer optimale Konfigurationen mit sich bringt.

Es ist weiterhin für die benannten Vertragsstaaten DE und GB die EP 0 681 099 als Stand der Technik im Sinne des Art-54(3) zu nennen. Aus diesem Dokument ist eine Kraftwerksanlage bekannt, bei welcher über ein ringförmig angeordnetes Injektorsystem Dampf in einen Diffusor des Verdichters eingedüst wird, wobei der Diffusor als Fangdüse für den eingedüsten Dampf wirkt.

Entscheidend ist dabei, die Treibdüsen des Injektorsystems so anzuordnen, dass bei kleinstmöglichem Anlagenaufwand ein maximaler Druckgewinn erzielt wird.

### Darstellung der Erfindung

Hier greift die Erfindung. Der Erfindung, wie sie in den Ansprüchen gekennzeichnet ist, liegt die Aufgabe zugrunde, bei einer Kraftwerksanlage der eingangs genannten Art ein Injektorsystem vorzuschlagen, das bei maximiertem Wirkungsgrad eine minimierte anlagetechnische Erweiterung der Gasturbogruppe vonnöten macht, und dabei eine maximale Druckerhöhung erreicht.

Der wesentliche Vorteil der Erfindung ist darin zu sehen, dass das Injektorsystem in den engeren und weiteren Bereich der ohnehin vorhandenen Verdichter und Austrittsdiffusor integriert wird, wodurch die Fangdüse des Injektors in unmittelbarer Wirkverbindung mit der Luftströmung im Verdichter oder stromab desselben steht, so dass die Implementierung eines solchen Injektorsystems ohne zusätzliche Baumassnahmen auskommt.

Aus betrieblicher Sicht ergibt sich aus einer solchen Konfiguration den Vorteil, dass mit zunehmender Dampfmenge über die Treibdüse der Druck vor der Turbine ansteigt, ohne dass der Gegendruck im Verdichter unzulässige Werte annimmt, dergestalt, dass eine genügend grosse Pumpmarge im Verdichter gewahrt bleibt.

Weitere Vorteile der Erfindung sind darin zu sehen, dass die Integration des Injektorssystems in den Verdichter oder in dessen Austrittsdiffusor in eine bestehende ein- oder mehrwellige Gasturbogruppe durchgeführt werden kann, wobei eine solche Erweiterung immer auch noch die Geschwindigkeitsverteilung und damit den Druckrückgewinn im Austrittsdiffusor verbessert.

Wird der Austrittsdiffusor im Bereich der Einbringung des Dampfes zum Betreiben des Injektors erweitert, so vermeidet dies das Auftreten von Uebergeschwindigkeiten, und erlaubt somit dem Dampf eine Nachexpansion, falls er mit Schallgeschwindigkeit und Restüberdruck austritt.

Ein weiterer wesentlicher Vorteil der Erfindung ist darin zu sehen, dass der Injektor am Ende des Verdichters, im Bereich oder innerhalb der Nachleitreihe angeordnet werden kann. Die Nachleitreihe erlaubt eine feine Verteilung bei hoher Austrittsgeschwindigkeit des eingedüsten Dampfes im Ringquerschnitt, wodurch Impulsaustausch und Druckgewinn verbessert werden.

Ferner darf nicht ausser Acht gelassen werden, dass mit der vorgeschlagen Erfindung im allgemeinen mit einem höheren Injektionsdruck gefahren werden kann.

Vorteilhafte und zweckmässige Weiterbildungen der erfindungsgemässen Aufgabenlösung sind in den weiteren Ansprüchen gekennzeichnet.

Im folgenden werden anhand der Zeichnungen Ausführungsbeispiele der Erfindung dargestellt und näher erläutert. Alle für das unmittelbare Verständnis der Erfindung nicht erforderlichen Elemente sind fortgelassen. Die Strömungsrichtung der verschiedenen Medien ist mit Pfeilen angegeben. Gleiche Elemente sind in den verschiedenen Figuren mit den gleichen Bezugszeichen versehen.

### Kurze Beschreibung der Zeichnungen

Es zeigt:
- Fig. 1: eine Teilansicht einer Gasturbogruppe mit einem Injektor, dessen Treibdüse am Aussenumfang des Austrittsdiffusors angeordnet ist;
- Fig. 2: eine Teilansicht einer Gasturbogruppe mit einem Injektor, dessen Treibdüse am Innenumfang des Austrittsdiffusors angeordnet ist;
- Fig. 3: eine Teilansicht einer Gasturbogruppe mit einem Injektor, dessen Treibdüse im Strömungsquerschnitt des Austrittsdiffusors angeordnet ist und
- Fig. 4: eine Teilansicht einer Gasturbogruppe mit einem Injektor, dessen Treibdüse im Bereich der Nachleitreihe des Verdichters angeordnet oder Teil dieser Nachleitreihe ist.

### Wege zur Ausführung der Erfindung, gewerbliche Verwertbarkeit

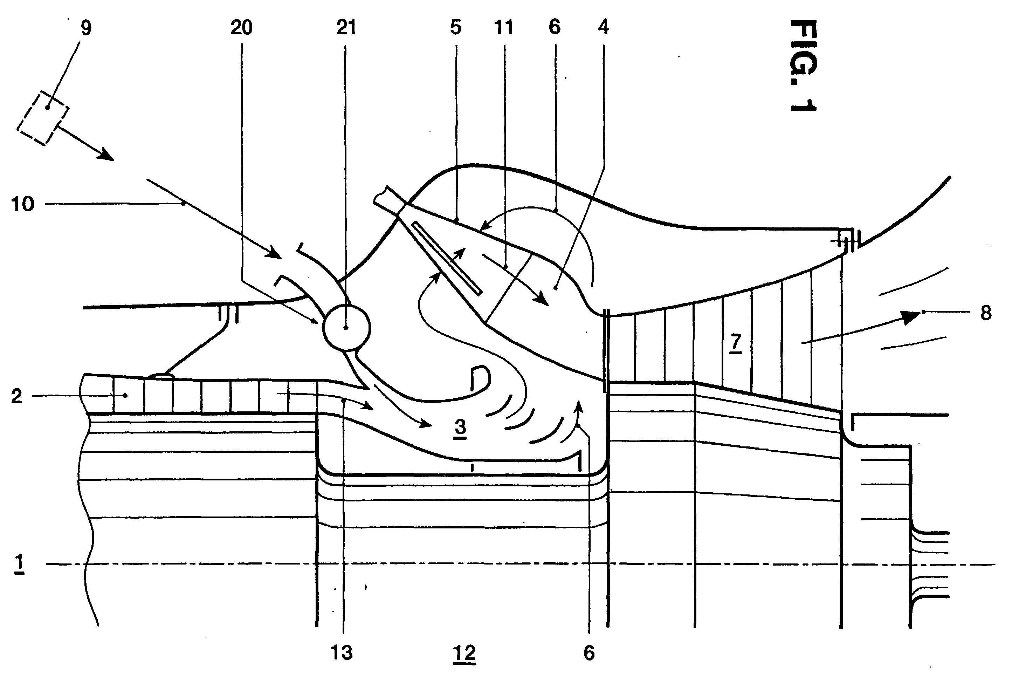

Fig. 1 zeigt bei einer Gasturbogruppe, welche im wesentlichen aus einem Generator 1, einem Verdichter 2, einer Brennkammer 4 und einer Turbine 7 besteht, die Wirkungsweise eines Injektorsystems 20, das unmittelbar stromab des Verdichters 2, d.h. im Bereich eines Austrittsdiffusors 3 wirkt. Wie die Figur zeigt, sind sowohl Verdichter 2 als auch Turbine 7 auf einer gemeinsamen Welle 12 gelagert. Unmittelbar stromab des Verdichters 2, innerhalb des sich dort anschliessenden Austrittsdiffusors 3, wird die vorverdichtete Luft 13 über die Wirkung des Injektorsystems 20 weiterverdichtet. Ein beispielsweise in einem Abhitzedampferzeuger 9 erzeugter Hochdruckdampf 10 beaufschlägt die Treibdüse dieses Injektorsystems 20 und bewirkt, dass die vorverdichtete Luft 13 aus dem Verdichter 2 weiterverdichtet wird, wobei hier der Austrittsdiffusor 3 als Fangdüse des Injektorsytems 20 wirkt. Dadurch wird die nachfolgende Verbrennung auf einer höheren Druckstufe durchgeführt. Die fertigverdichtete Luft 6 strömt nämlich über mindestens einen Brenner 5 in eine Brennkammer 4, welche vorzugsweise die Form einer Ringbrennkammer hat, und in welcher Heissgase 11 bereitgestellt werden. Bei der Ausbildung der Brennkammer 4 als Ringbrennkammer sind mehrere Brenner kopfseitig und in Umfangsrichtung derselben angeordnet, wobei es sich bei diesen Brennern vorzugsweise um Vormischbrenner gemäss EP-0 321 809 handelt, wobei die Ausführungen in dieser Druckschrift intergrierender Bestandteil dieser Beschreibung sind. Bei einer solchen Ringbrennkammer besteht das Injektorsystem 20 aus einem geschlossenen Kranz von Injektoren 21, welche aussen-konzentrisch zum Austrittsdiffusor 3 angeordnet sind. Die in der genannten Brennkammer 4 aufbereiteten Heissgase 11 beaufschlagen die nachgeschaltete Turbine 7. Die Abgase 8 daraus werden dem Abhitzedampferzeuger 9 zugeführt, wo sie energetisch weiter genutzt werden. Aus der freigesetzten thermischen Energie aus diesen Abgasen 8 wird in einem Hochdruckteil des Abhitzedampferzeugers 9 ein Hochdruckdampf 10 erzeugt, der beispielsweise über eine nicht gezeigte Ringleitung zu den einzelnen Injektoren 21 geführt wird, und dort jeweils die entsprechende Treibdüse beaufschlägt. Der für das Injektorsystem 20 eingesetzte Dampf muss nicht notwendigerweise aus einem Abhitzedampferzeuger stammen. Sobald Dampf in genügender Qualität vorhanden ist, lässt er sich zum Betreiben des Injektorsystems 20 ohne weiteres einsetzen. Aus betrieblicher Sicht ergibt sich aus der Wirkung des Injektorsystems 20 der Vorteil, dass mit zunehmendem Dampf 10 der Druck vor der Turbine 7 steigt, ohne dass der Gegendruck im Verdichter 2 unzulässig anwachsen würde. Das hier beschriebene Injektorsystem 20 lässt sich äusserst leicht in eine bestehende ein- oder mehrwellige Gasturbogruppe einbauen.

Selbstverständlich ist des weiteren möglich, eine Dampfmenge auch über Injektoren für andere Zwecke einzubringen, beispielsweise als Kühlmittel für die thermisch belasteten Aggregate der Gasturbogruppe, oder zur Vergrösserung des Massenstromes, oder als Zumischungsmedium eines Brennstoffes. Bei einer Dampfinjektion in den Ringspalt der Rotorkühlluftzuführung geschieht dies vorzugsweise in axialer oder schrägaxialer Richtung. Dies lässt eine Aufbereitung der KühlfluidVersorgung des Rotors bezüglich des Druckes und der Temepratur, entsprechend dem höheren Druck der Hauptströmung, zu. Im von Rotor und Stator begrenzten Spaltbereich kann die Tangentialkomponente des über die Injektoren eingedüsten Dampfes zur Aufrechterhaltung oder Erhöhung des Dralles in Drehrichtung herangezogen werden, wodurch die Reibungsverluste in diesem Bereich vermindert oder sogar in treibende Nutzleistung umgesetzt werden. Selbstverständlich ist es hier möglich, die Dampfeinbringung über Laufschaufeln des Rotors vorzunehmen.

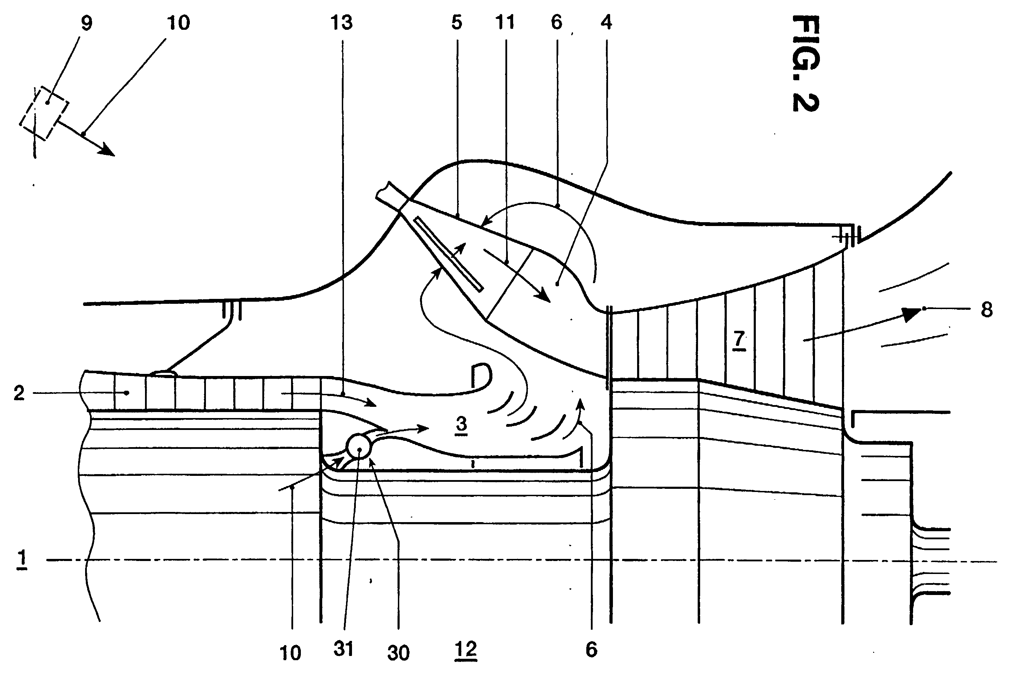

Fig. 2 zeigt einen ähnlichen Aufbau wie in Fig. 1, wobei das Injektorsystem 30 auch hier aus einem geschlossenen Kranz von Injektoren 31, welche allerdings innenkonzentrisch zum Austrittsdiffusor 3 angeordnet sind. Ihre Fahrweise aber ist im Grunde genommen die Gleiche.

Erfindungsgemäss werden die beiden Varianten gemäss Fig. 1 und 2 kombiniert. Bei einer solchen Kombination werden die einzelnen Injektoren bevorzugt so angeordnet dass die Dampfeintrittstellen in den Austrittsdiffusor eine Beschleunigung der wandnahen Grenzschichten bewirken, so dass eine Verringerung des Blockagefaktors, eine Verbesserung der Geschwindigkeitsverteilung im Austrittsdiffusor selbst und eine markante Druckrückgewinnung die Folge sind. Die beiden Figuren deuten des weiteren darauf hin, dass an den Stellen der Dampfeindüsung in den Austrittsdiffusor eine Querschnittserweiterung angestrebt wird. Diese Vorkehrung vermeidet eine Uebergeschwindigkeit und erlaubt dem Dampf eine Nachexpansion, falls er mit Schallgeschwindigkeit und Restüberdruck austritt. Stromab dieser Querschnittserweiterung lässt sich die anschliessende Mischzone mit konstantem oder nur leicht zunehmendem Querschnitt ausbilden, wodurch der für den Druckanstieg nötige Impulsaustausch erzielt werden kann.

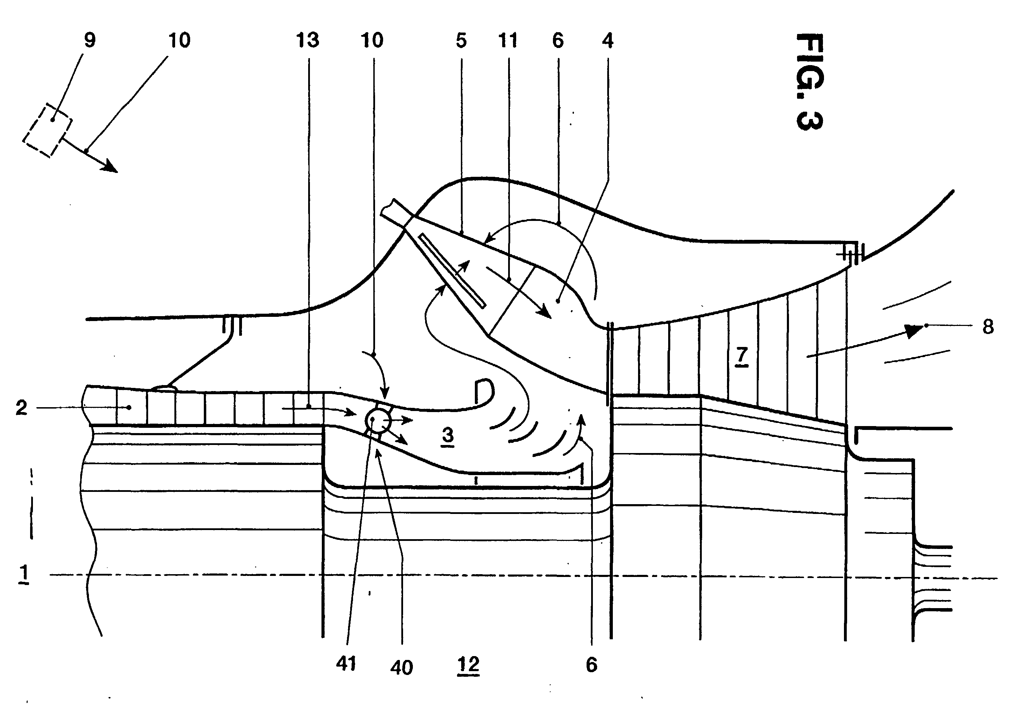

Fig. 3 zeigt die Anordnung eines Injektorsystems 40 innerhalb des Durchflussquerschnittes des Austrittsdiffusors 3. Dieses Injektorsystem 40 besteht ebenfalls aus einem geschlossenen Kranz von einzelnen Injektoren 41, welche jeweils mehrstrahlig sind. Bei dieser Ausführungsart gelingt es, die wandnahen Grenzschichten innerhalb des Austrittsdiffusors 3 gezielter zu beschleunigen.

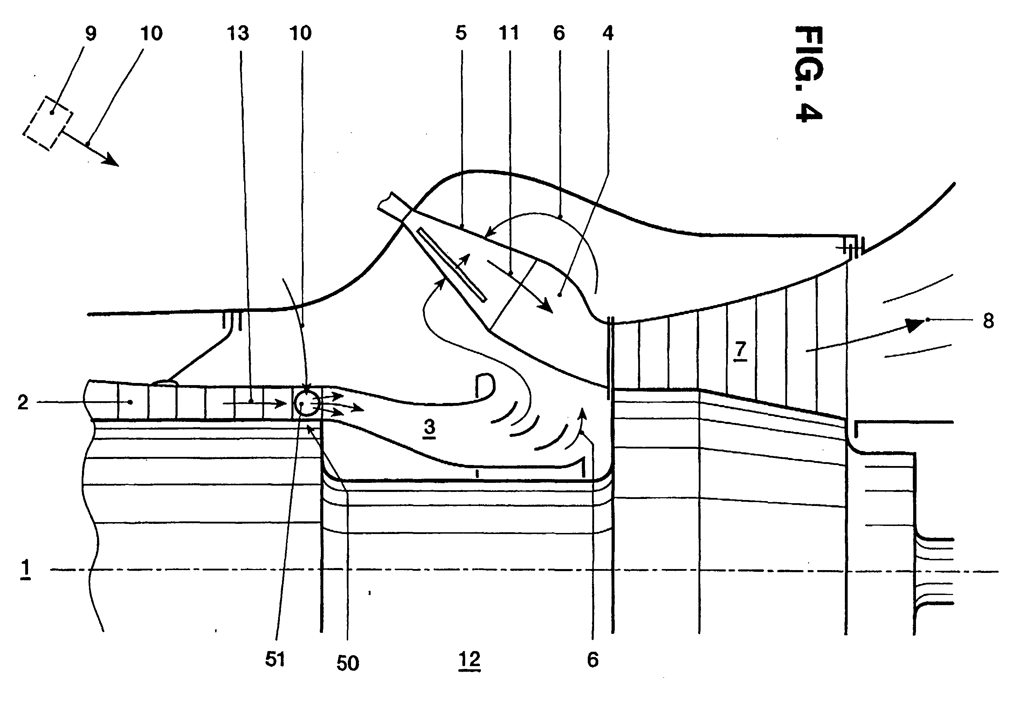

Fig. 4 zeigt eine weitere Ausführungsvariante, bei welcher ein Injektorsystem 50, das ebenfalls aus einem geschlossenen Kranz von einzelnen Injektoren 51 besteht, im Bereich der Nachleitreihe des Verdichters 2 angeordnet ist. Bei einer solchen Konfiguration lässt sich der Dampf 10 sehr gut mit hoher Geschwindigkeit durch die Hinterkante der Nachleitreihe eindüsen. Dabei kann die radiale oder quasi-radiale Dampfmengenverteilung so ausgebildet werden, dass sie ein für den Druckrückgewinn günstiges Geschwindigkeitsprofil erzeugt. Auch hier ist eine radiale Querschnittserweiterung an der Stelle des Dampfeintrittes vorteilhaft. Die Nachleitreihe erlaubt im allgemeinen eine feine Verteilung des Dampfes 10 im Ringquerschnitt, wodurch eine Verbesserung des Impulsaustausches und infolgedessen des Druckgewinnes resultieren. Der Austritt des Dampfes mit hoher Geschwindigkeit über die Nachleitreihe lässt sich allenfalls durch den Einbau von separaten Austrittskörpern verbessern, wobei aber dann auf die Strömung der vorverdichteten Luft 13 Rücksicht genommen werden muss.

Allgemein lässt sich sagen, dass der Injektordruck im Bereich des doppelten Verdichterdruckes gewählt wird, wodurch der Abhitzedampferzeuger mit grosser Temperaturdifferenz betrieben werden kann, was eine Verkleinerung der Austauschfläche nach sich zieht. Auch sonst lässt mit den beschriebenen Dampfeinbringungen über Injektoren eine Lastregelung bei einem hohen Teillastwirkungsgrad durchführen, indem von der Nennlast aus vorzugsweise zuerst der Luftmassenstrom, dann erst die Dampfmenge und zuletzt die Turbinen-Eintrittstemperatur abgesenkt werden. Wird hingegen zuerst auf die Dampfmenge eingegriffen, so weist die reduzierte Dampfmenge eine höhere Temperatur auf; dies erlaubt indessen, dass der im Nachgang reduzierte Luftmassenstrom die Aufrechterhaltung der Feuerungstemperatur erlaubt.

### Bezugszeichenliste

- 1: Generator
- 2: Verdichter
- 3: Austrittsdiffusor
- 4: Brennkammer
- 5: Brenner
- 6: Fertigverdichtete Luft
- 7: Turbine
- 8: Abgase
- 9: Abhitzedampferzeuger
- 10: Dampf, Hochdruckdampf
- 11: Heissgase
- 12: Welle
- 13: Vorverdichtete Luft
- 20: Injektorsystem
- 21: Injektoren
- 30: Injektorsystem
- 31: Injektoren
- 40: Injektorsystem
- 41: Injektoren
- 50: Injektorsystem
- 51: Injektoren

## Patentansprüche

1. Kraftwerksanlage, im wesentlichen bestehend aus mindestens einem Verdichter (2), mindestens einer mit mindestens einem Brenner betreibbaren Brennkammer (4), mindestens einer stromab der Brennkammer wirkenden Turbine (7), wobei stromauf der Brennkammer mindestens ein Injektorsystem vorhanden ist, dessen Treibdüsen mit einem Dampf betreibbar sind, welches Injektorsystem (20, 30) im Bereich eines dem Verdichter (2) nachgeschalteten Austrittsdiffusors (3) angeordnet ist, und wobei der Austrittsdiffusor (3) die Fangdüse des Injektorsystems bildet, dadurch gekennzeichnet, dass die Treibdüsen des Injektorsystems konzentrisch oder quasi-konzentrisch zum Austrittsdiffusor (3) stehen, und, dass das Injektorsystem aus einer Kombination eines Kranzes am Aussenumfang des Diffusors angeordneter Injektoren (21) und eines Kranzes am Innenumfang des Diffusors angeordneter Injektoren (31) besteht.

2. Kraftwerksanlage, im wesentlichen bestehend aus mindestens einem Verdichter (2), mindestens einer mit mindestens einem Brenner betreibbaren Brennkammer (4), mindestens einer stromab der Brennkammer wirkenden Turbine (7), wobei stromauf der Brennkammer mindestens ein Injektorsystem vorhanden ist, dessen Treibdüsen mit einem Dampf betreibbar sind, welches Injektorsystem (40) im Bereich eines dem Verdichter (2) nachgeschalteten Austrittsdiffusors (3) angeordnet ist, und wobei der Austrittsdiffusor (3) die Fangdüse des Injektorsystems bildet, dadurch gekennzeichnet, dass die Treibdüsen des Injektorsystems konzentrisch oder quasi-konzentrisch zum Austrittsdiffusor (3) stehen, und, dass das Injektorsystem (40) aus einem Kranz einzelner, mehrstahliger Injektoren (41) besteht, welche innerhalb des Durchströmungsquerschnittes des Austrittsdiffusors (3) angeordnet sind.

3. Kraftwerksanlage, im wesentlichen bestehend aus mindestens einem Verdichter (2), mindestens einer mit mindestens einem Brenner betreibbaren Brennkammer (4), mindestens einer stromab der Brennkammer wirkenden Turbine (7), wobei stromauf der Brennkammer mindestens ein Injektorsystem vorhanden ist, dessen Treibdüsen mit einem Dampf betreibbar sind, welches Injektorsystem (50) im Bereich eines dem Verdichter (2) nachgeschalteten Austrittsdiffusors (3) angeordnet ist, und wobei der Austrittsdiffusor (3) die Fangdüse des Injektorsystems bildet, dadurch gekennzeichnet, dass die Treibdüsen des Injektorsystems konzentrisch oder quasi-konzentrisch zum Austrittsdiffusor (3) stehen, und, dass die Treibdüsen der Injektoren (51) in die Schaufeln der Nachleitreihe des Verdichters (2) integriert sind.

4. Kraftwerksanlage nach einem der Anspruche 1 oder 2, dadurch gekennzeichnet, dass die Dampfeintrittsstellen in den Diffusor eine Beschleunigung der wandnahen Grenzschichten bewirken.

## Claims

1. Power plant, essentially comprising at least one compressor (2), at least one combustion chamber (4) operable with at least one burner and at least one turbine (7) acting downstream of the combustion chamber, there being present upstream of the combustion chamber at least one injector system, the propulsion nozzles of which can be operated by means of steam, which injector system (20, 30) is arranged in the region of an outlet diffuser (3) located downstream of the compressor (2), and the outlet diffuser (3) forming the combining nozzle of the injector system, characterized in that the propulsion nozzles of the injector system are concentric or quasi-concentric to the outlet diffuser (3), and in that the injector system comprises a combination of a ring of injectors (21) arranged on the outer circumference of the diffuser and a ring of injectors (31) arranged on the inner circumference of the diffuser.

2. Power plant, essentially comprising at least one compressor (2), at least one combustion chamber (4) operable with at least one burner and at least one turbine (7) acting downstream of the combustion chamber, there being present upstream of the combustion chamber at least one injector system, the propulsion nozzles of which can be operated by means of steam, which injector system (40, 30) is arranged in the region of an outlet diffuser (3) located downstream of the compressor (2), and the outlet diffuser (3) forming the combining nozzle of the injector system, characterized in that the propulsion nozzles of the injector system are concentric or quasi-concentric to the outlet diffuser (3), and in that the injector system (40) comprises a ring of individual, multi-set injectors (41) which are arranged within the throughflow cross section of the outlet diffuser (3).

3. Power plant, essentially comprising at least one compressor (2), at least one combustion chamber (4) operable with at least one burner and at least one turbine (7) acting downstream of the combustion chamber, there being present upstream of the combustion chamber at least one injector system, the propulsion nozzles of which can be operated by means of steam, which injector system (50, 30) is arranged in the region of an outlet diffuser (3) located downstream of the compressor (2), and the outlet diffuser (3) forming the combining nozzle of the injector system, characterized in that the propulsion nozzles of the injector system are concentric or quasi-concentric to the outlet diffuser (3), and in that the propulsion nozzles of the injectors (51) are integrated in the blades of the outlet guide vanes of the compressor (2).

4. Power plant according to one of Claims 1 or 2, characterized in that the steam inlet points into the diffuser bring about an acceleration of the near-wall boundary layers.

## Revendications

1. Installation de centrale électrique, se composant, pour l'essentiel, d'au moins un compresseur (2), d'au moins une chambre de combustion (4), capable de fonctionner à l'aide d'au moins un brûleur, d'au moins une turbine (7), agissant en aval de la chambre de combustion, au moins un système d'injecteurs, dont les buses de propulsion sont capables de fonctionner à l'aide d'une vapeur, étant présent en amont de la chambre de combustion, lequel système d'injecteurs (20, 30) est disposé dans la zone d'un diffuseur de sortie (3) intercalé à la suite du compresseur (2), et le diffuseur de sortie (3) formant la buse de rattrapage du système d'injecteurs, caractérisée en ce que les buses de propulsion du système d'injecteurs sont placées de manière concentrique ou quasi-concentrique par rapport au diffuseur de sortie (3), et en ce que le système d'injecteurs se compose d'une combinaison d'une couronne d'injecteurs disposés sur le pourtour externe du diffuseur (21) et d'une couronne d'injecteurs (31) disposés sur le pourtour interne du diffuseur.

2. Installation de centrale électrique, se composant, pour l'essentiel, d'au moins un compresseur (2), d'au moins une chambre de combustion (4), capable de fonctionner à l'aide d'au moins un brûleur, d'au moins une turbine (7), agissant en aval de la chambre de combustion, au moins un système d'injecteurs, dont les buses de propulsion sont capables de fonctionner à l'aide d'une vapeur, étant présent en amont de la chambre de combustion, lequel système d'injecteurs (40) est disposé dans la zone d'un diffuseur de sortie (3) intercalé à la suite du compresseur (2), et le diffuseur de sortie (3) formant la buse de rattrapage du système d'injecteurs, caractérisée en ce que les buses de propulsion du système d'injecteurs sont placées de manière concentrique ou quasi-concentrique par rapport au diffuseur de sortie (3), et en ce que le système d'injecteurs (40) se compose d'une couronne d'injecteurs individuels, à plusieurs jets (41), qui sont disposés au sein de la section transversale d'écoulement du diffuseur de sortie (3).

3. Installation de centrale électrique, se composant, pour l'essentiel, d'au moins un compresseur (2), d'au moins une chambre de combustion (4), capable de fonctionner à l'aide d'au moins un brûleur, d'au moins une turbine (7), agissant en aval de la chambre de combustion, au moins un système d'injecteurs, dont les buses de propulsion sont capables de fonctionner à l'aide d'une vapeur, étant présent en amont de la chambre de combustion, lequel système d'injecteurs (50) est disposé dans la zone d'un diffuseur de sortie (3) intercalé à la suite du compresseur (2), et le diffuseur de sortie (3) formant la buse de rattrapage du système d'injecteurs, caractérisée en ce que les buses de propulsion du système d'injecteurs sont placées de manière concentrique ou quasi-concentrique par rapport au diffuseur de sortie (3), et en ce que les buses de propulsion des injecteurs (51) sont intégrées dans les aubes de la rangée de guidage du compresseur (2).

4. Installation de centrale électrique selon l'une ultérieur des revendications 1 ou 2, caractérisée en ce que les points d'entrée de la vapeur dans le diffuseur provoquent une accélération des couches limites proches des parois.
